Europäisches Patentamt

European Patent Office

Office européen des brevets

(19)

(11) Numéro de publication: **0 233 806 B1**

(12) **FASCICULE DE BREVET EUROPEEN**

(45) Date de publication du fascicule du brevet: **22.11.90**

(51) Int. Cl.⁵: **F 02 K 9/86**

(21) Numéro de dépôt: **87400118.3**

(22) Date de dépôt: **19.01.87**

(54) **Ensemble de tuyère perfectionné comportant un col à section de passage réglable.**

(30) Priorité: **20.01.86 FR 8600693**

(43) Date de publication de la demande:
**26.08.87 Bulletin 87/35**

(45) Mention de la délivrance du brevet:
**22.11.90 Bulletin 90/47**

(84) Etats contractants désignés:
**DE GB IT**

(56) Documents cités:
**DE-A-2 063 703        US-A-2 612 747
DE-U-8 532 148        US-A-3 245 620
GB-A-2 131 883        US-A-4 444 006
US-A-2 443 186**

**AGARD Lecture Series No. 136, NATO Advisory
Group for Aerospace Research and
Development, Ramjet and Ramrocket
propulsion systems for missiles, October 1984,
"Solid Propellant Ramrockets", H-L. Besser, page
7**

(73) Titulaire: **AEROSPATIALE Société Nationale
Industrielle
37, Boulevard de Montmorency
F-75781 Paris Cédex 16 (FR)**

(72) Inventeur: **Joly, Jean-Louis
4 rue du Pressoir
F-78580Bazemont (FR)**
Inventeur: **Servigne, Michel François
5 impasse des leviers
F-78112 Fourqueux (FR)**
Inventeur: **Claramonte, Manuel Pierre
24 rue du Côteau
F-92370 Chaville (FR)**
Inventeur: **Calabro, Max Jean-Pierre
15 rue des Chèvremonts
F-92000 Nanterre (FR)**
Inventeur: **Pham, Jean-Pierre
4 avenue Boileau
F-78170 la Celle Saint-Cloud (FR)**

(74) Mandataire: **Barnay, André François
Cabinet Barnay 80 rue Saint-Lazare
F-75009 Paris (FR)**

## Description

La présente invention est relative à un ensemble de tuyère dont la section du col est réglable et destiné à être utilisé comme tuyère d'un moteur-fusée pour faire varier la poussée du propulseur par le seul réglage de la section de passage des gaz chauds produits par un propergol solide et dans lequel la gamme de réglage de la poussée doit être comprise dans un rapport d'environ 1 à 100.

L'article: "Solid Propellant Ramrockets" de Hans L. Besser, AGARD Lectures séries no 136, Octobre 1984 décrit un ensemble de tuyère comportant un col et des moyens de réglage de la section de ce col, qui sont constitués par une vanne coulissant perpendiculairement à l'axe de la tuyère, cet ensemble comprenant successivement dans le sens de l'éjection des gaz: un premier col, une chambre, et un second col.

La page 7.10 de ce document, et la figure 3.13 à laquelle elle se réfère est uniquement une étude théorique des logiques de commande pouvant s'appliquer aux moteurs-fusées à propergol solide, et les figures schématiques ne donnent aucun détail révélateur de l'agencement matériel ni de la disposition exacte des moyens de commande de la section du col dans laquelle ils sont disposés.

La présente invention concerne un ensemble de tuyère de ce type général.

Suivant ce même document, on utilise déjà dans ce but des vannes dont l'ouverture et la fermeture sont pilotées par un dispositif d'actionnement extérieur.

US-A-3.743.184 décrit une tuyère comportant quatre lames mobiles disposées à 90° et s'étendant radialement à l'intérieur du col de la tuyère, ces lames étant réglables radialement par rapport à l'axe de la tuyère et étant également susceptibles de tourner indépendamment autour de leur propre axe permettant ainsi de régler le débit et, par suite, la poussée.

Ce dispositif, qui ne permet pas une obturation totale du col de la tuyère, nécessite une source de puissance distincte pour chacune des quatre lames, ou bien un mécanisme compliqué, peu fiable et coûteux, de renvoi sur les quatre axes à 90°, capable en outre d'assurer deux mouvements différents, en translation et en rotation sur chacun de ces axes.

US-A-3.192.709 décrit une tuyère dont la section de passage du col est réglable au moyen de trois éléments mobiles radialement dans le col, en translation, disposés à 120° et actionnés par une came annulaire rotative dans un plan perpendiculaire à l'axe de la tuyère.

La rotation de la came amène des rampes de celle-ci à agir sur des ergots solidaires des éléments mobiles et déplace ceux-ci radialement dans un sens ou dans l'autre.

Non seulement ces trois éléments mobiles ne peuvent obturer complètement le col de la tuyère mais les saillies qu'ils forment dans ce col provoquent de violentes et incontrôlables turbulences dans les gaz chauds sortant de la tuyère. Cet inconvénient majeur se retrouve du reste également dans le dispositif décrit dans US-A-3.743.184.

On remarquera enfin que dans ces deux dispositifs les organes coulissants travaillent en porte-à-faux, ce qui est nuisible en raison des hautes pressions auxquelles ils sont exposés sous des températures extrêmement élevées.

L'invention a pour but de remédier à ces inconvénients en réalisant un ensemble de tuyère à poussée réglable par la seule variation de la section de passage des gaz chauds produits par un propergol, de construction simple et fiable et procurant en sortie de tuyère un jet ayant une symétrie et une homogénéité très améliorées, permettant ainsi de mesurer la pression et de calculer la poussée.

L'invention a pour objet à cet effet un ensemble de tuyère présentant les caractéristiques énoncées dans la partie caractérisante de la revendication 1.

La description qui va suivre, en regard des dessins annexés à titre d'exemples non limitatifs, permettra de bien comprendre comment l'invention peut être mise en pratique.

La figure 1 est une vue en section longitudinale d'un ensemble de tuyère selon l'invention.

La figure 2 en est une vue en coupe suivant la ligne II-II de la figure 1.

La figure 3 est une vue en coupe d'une variante.

La figure 4 est une vue en coupe suivant la ligne IV-IV de la figure 3.

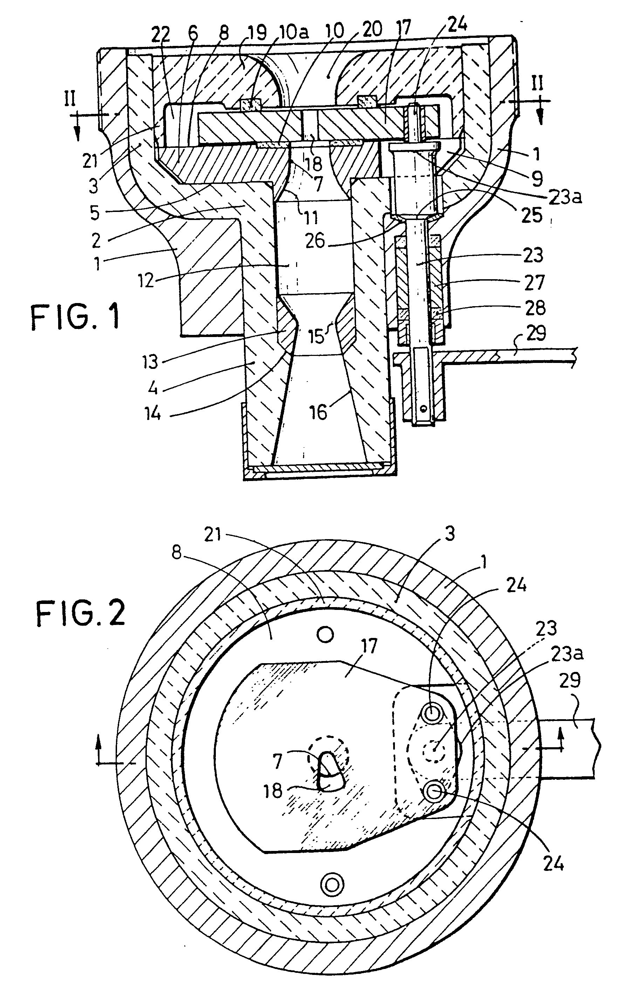

En se référant tout d'abord aux figures 1 et 2, l'ensemble de tuyère suivant l'invention comporte une enveloppe 1 ayant par exemple en section la forme d'un solide de révolution et entourant partiellement un corps 2 en matière réfractaire ayant une partie amont 3 de grand diamètre et une partie aval 4 de diamètre réduit délimitant entre elles un épaulement 5.

Sur l'épaulement 5 est disposée une pièce 6 en matière réfractaire qui délimite un premier col 7 de la tuyère et présente une surface plane 8 formant un siège pour un obturateur comme on le décrira dans la suite.

La pièce 6 présente une forme circulaire correspondant à celle de la partie 3 du corps et une ouverture excentrée 9 dans un but qui apparaîtra dans la suite.

D'une façon avantageuse une cuvette peu profonde forme un logement creusé dans la surface plane 8 de la pièce 6 pour recevoir un disque 10 en graphite expansé entourant le col 7 de la tuyère.

D'une façon classique, le col 7 s'évase en direction aval dans le sens de l'écoulement des gaz à travers la tuyère comme représenté en 11 pour rejoindre la paroi de la partie aval 4 du corps 2 délimitant ainsi l'extrémité supérieure d'une chambre 12 de tranquillisation cylindrique dont l'extrémité inférieure ou aval est délimitée par une garniture 13 en matière réfractaire, de forme annulaire, reposant en appui sur un épaulement 14 du corps 2 et qui délimite un second col 15 dans le prolongement duquel s'étend vers l'aval une partie divergente 16 de la tuyère.

Un obturateur 17, réalisé en un composite résistant à la chaleur, comprenant un substrat fibreux et une matière réfractaire, par exemple carbone-carbone, carbone-céramique, ou encore céramique-céramique, repose sur la surface supérieure 8 de la pièce 6 et sur la garniture annulaire 10 en carbone expansé.

L'obturateur 17 présente la forme d'une plaque comportant une ouverture 18 ayant dans son ensemble une forme triangulaire, qui est maintenue en appui sur la surface 8 et la garniture 10 par une garniture annulaire 10a également en carbone expansé maintenue dans une gorge circulaire de forme complémentaire ménagée dans une pièce 19 de forme générale circulaire présentant en son centre une ouverture 20 de forme convergente alignée avec le col 7. La pièce 19 est également réalisée en une matière réfractaire et présente un rebord 21 s'étendant vers le bas, délimitant avec la pièce 6 un espace 22 entourant l'obturateur 17.

Dans l'ouverture 9 de la pièce 6 s'étend une extrémité d'un arbre 23 monté rotatif dans l'enveloppe 1, dans un alésage de celle-ci s'étendant parallèlement à l'axe de la tuyère.

L'autre extrémité de l'arbre 23 comporte deux doigts 24 diamétralement opposés par rapport à l'axe de l'arbre 23 et s'étendant dans deux trous complémentaires prévus dans la plaque 17 constituant l'obturateur.

De préférence l'arbre 23 comporte une partie 23a de diamètre plus grand ayant à son extrémité inférieure, ou aval, une partie chanfreinée 25 reposant en appui sur une garniture 26 en carbone expansé ou en carbone-carbone constituant un joint d'étanchéité, la partie inférieure de l'arbre 23 s'étendant à travers un presse-étoupe comprenant une partie 27 en un matériau élastique (graphite expansé ou carbone-carbone) serrée autour de l'arbre 23 par des rondelles 28. L'extrémité inférieure ou aval de l'arbre 23 est fixée sur une extrémité d'un levier d'actionnement 29 d'une façon quelconque connue.

Grâce à cet agencement, lorsqu'on actionne le levier 29, l'obturateur 17 décrit un arc de cercle ayant pour centre l'axe de l'arbre 23, ce qui a pour effet de déplacer son ouverture 18 de forme triangulaire suivant un arc de cercle passant par l'axe du col 7 de la tuyère. En raison de sa forme triangulaire, l'ouverture 18 peut venir en coïncidence progressivement avec le col 7 et passer d'une position d'obturation totale de ce dernier à différentes positions dans lesquelles la largeur de la base triangulaire 18 s'approche progressivement d'une position de coïncidence avec le col 7 de l'ensemble de tuyère. On peut ainsi régler à volonté la section de passage des gaz dans le col 7.

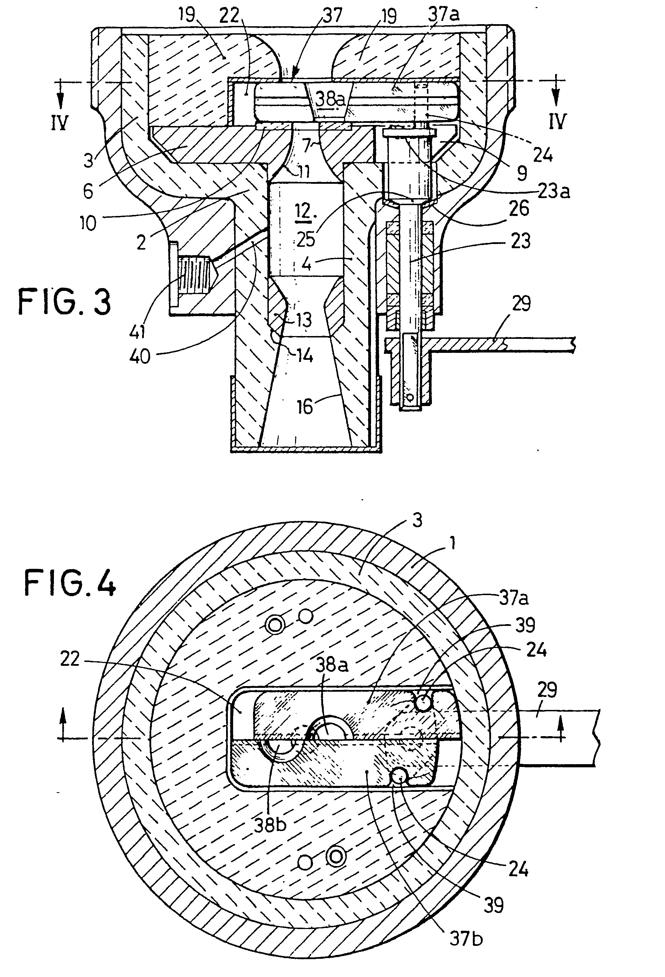

En se référant maintenant aux figures 3 et 4, on a représenté un second mode de réalisation de l'invention dans lequel les organes identiques sont désignés par les mêmes références.

Dans cette variante, l'obturateur désigné dans son ensemble par la référence 37, coulisse transversalement par rapport à l'axe de l'ensemble de tuyère sur la garniture 10 et il est constitué d'une plaque divisée en deux moitiés égales 37a, 37b comportant chacune une moitié d'un orifice 38a, 38b respectivement, ces demi-plaques 37a, 37b étant maintenues et guidées latéralement dans l'espace 22 ménagé entre les pièces 6 et 19.

D'une façon avantageuse le logement 22 présente en plan une forme à peu près rectangulaire et les deux demi-plaques 37a et 37b disposées côte à côte comme représenté à la figure 4 ont une forme globale complémentaire de celle de l'espace 22 et se déplacent en coulissant dans ce dernier l'une contre l'autre suivant la ligne de séparation.

Les demi-plaques 37a, 37b constituant l'obturateur 37 comportent chacune au voisinage de l'une de leurs extrémités une échancrure 39 dans laquelle est engagé l'un des doigts 24 solidaires de l'extrémité de l'arbre 23.

En considérant la figure 4, on comprend que lorsque l'arbre 23 est entraîné en rotation au moyen du levier 29, les deux demi-plaques 37a, 37b se déplacent en coulissant en sens inverse de façon symétrique par rapport à l'axe de l'ensemble de tuyère, et que lorsque les deux demi-ouvertures 38a, 38b se trouvent l'une en face de l'autre, la section totale de passage du col 7 est dégagée tandis que lorsque les deux demi-plaques se trouvent dans la position représentée à la figure 4 le col 7 se trouve obturé.

Dans les deux modes de réalisation décrits ci-dessus le déplacement de l'obturateur s'effectue dans un plan perpendiculaire à l'axe d'écoulement des gaz chauds et on remarquera que l'obturateur 17 ou 37 est appliqué par ces gaz contre le siège ménagé sur la pièce 6 et que, contrairement aux dispositifs décrits dans la technique antérieure, l'obturateur ne s'étend pas à travers la paroi de l'enveloppe 1, ce qui améliore l'étanchéité de ce dispositif.

En effet, la communication avec l'extérieur ne pourrait s'établir qu'à travers le passage de l'arbre 23 dans le corps 2 et l'enveloppe 1 dans lequel l'étanchéité est assurée d'une part par la garniture 26 et par le presse-étoupe entourant l'arbre 23 dans sa partie traversant l'enveloppe 1.

On remarquera également que la chambre cylindrique 12 permet d'obtenir une tranquillisation de l'écoulement des gaz chauds après une onde de choc qui rend l'écoulement subsonique. En outre, dans le mode de réalisation de la figure 3, la force nécessaire devant être appliquée au levier 29 pour déplacer les deux demi-parties de l'obturateur est encore inférieure à celle nécessaire pour actionner l'obturateur dans le mode de réalisation de la figure 1.

La chambre 12, qui constitue une seconde chambre dans un dispositif de tuyère pour des gaz chauds produits par un propergol solide, permet d'améliorer la qualité du jet en ce qui concerne s symétrie et son homogénéité en sortie de tuyère, ainsi que de mesurer la pression régnant dans cette chambre, ce qui permet d'en déduire la poussée par la connaissance d'un seul paramètre de pression, ce qui facilite par conséquent la conception de la boucle d'asservissement utilisée pour le pilotage de cet ensemble de tuyère.

On représenté à la figure 3 un conduit 40 adapté pour permettre la pose d'une sonde de pression (non représentée) maintenue en position au moyen d'une vis disposée dans un trou taraudé 41.

Les différents éléments constituant l'ensemble de tuyère décrit ci-dessus et notamment les parties exposées directement aux gaz chauds peuvent être réalisés en un matériau composite comprenant un substrat fibreux et une matière réfractaire, par exemple les "carbone-carbone", "carbone-céramique", ou "céramique-céramique" ou autre matériau approprié étant choisi pour ses propriétés permettant de conserver à très haute température ses propriétés mécaniques, son faible coefficient de frottement et sa stabilité dimensionnelle.

## Revendications

1. Ensemble de tuyère comprenant, successivement dans le sens de l'éjection des gaz, un premier col, une chambre de tranquillisation des gaz, un second col et des moyens de réglage de la section du premier col, montés coulissants perpendiculairement à l'axe de la tuyère, caractérisé en ce que le second col est suivi par un divergent et lesdits moyens de réglage sont constitués par une vanne à obturateur perforé (17, 37), entièrement contenu dans le corps (2) de l'ensemble, et en ce qu'il comprend un organe d'actionnement de l'obturateur, constitué par un arbre (23) monté rotatif parallèlement à l'axe de l'ensemble de tuyère et de façon étanche dans le corps (2) de cet ensemble, l'obturateur perforé (17, 37) coulissant sur un siège (8) entourant le premier col (7).

2. Ensemble de tuyère suivant la revendication 1, caractérisé en ce que l'obturateur (17) est perforé d'une ouverture (18) présentant dans son ensemble en plan une forme triangulaire, et coulisse suivant un arc de cercle dont le centre coïncide avec l'axe dudit arbre rotatif (23).

3. Ensemble de tuyère suivant la revendication 1, caractérisé en ce que l'obturateur perforé (37) est divisé en deux parties égales (37a, 37b) présentant chacune une moitié (38a, 38b) de ladite perforation et coulissant simultanément en ligne droite l'une contre l'autre en sens inverse symétriquement dans un même plan sur un siège entourant le premier col (7).

4. Ensemble de tuyère selon la revendication 3, caractérisé en ce que les moitiés (38a, 38b) de ladite perforation sont semi-circulaires et on le même diamètre.

5. Ensemble suivant la revendication 3, caractérisé en ce que ledit arbre (23) comporte deux doigts (24) d'entraînement de l'obturateur, entraînant chacun une moitié de l'obturateur.

6. Ensemble de tuyère suivant la revendication 1 ou 2, caractérisé en ce que l'étanchéité entre l'arbre (23) et le corps (2) est assurée d'une part au moyen d'une partie chanfreinée (25) dudit arbre, qui repose en appui sur une garniture d'étanchéité (26) et, d'autre part, au moyen d'un presse-étoupe (27), ce dernier et la bague (26) étant réalisés par exemple en carbone expansé ou en carbone-carbone.

## Patentansprüche

1. Schubdüse, in Ausströmrichtung des Gases nacheinander bestehend aus einem ersten Kragen, einer Beruhigungskammer für das Gas, einem zweiten Kragen und Mittel zum Regeln des Querschnitts des ersten Kragens, dadurch gekennzeichnet, daß dem zweiten Kragen ein Zerstreuungsrohr nachfolgt und die Mittel zum Regeln von einem Ventil mit einer perforierten Verschlußvorrichtung (17, 37) gebildet sind, die vollständig im Körper (2) der Schubdüse angeordnet ist, und daß sie ein Betätigungsglied für die Verschlußvorrichtung umfaßt, die von einer Spindel (23) gebildet ist, die parallel zur Achse der Schubdüse drehbar und abgedichtet im Körper (2) der Schubdüse gelagert ist, wobei die perforierte Verschlußvorrichtung (17, 37) auf einem den ersten Kragen (7) umschließenden Sitz (8) verschiebbar ist.

2. Schubdüse nach Anspruch 1, dadurch gekennzeichnet, daß die Verschlußvorrichtung (17) durch eine Öffnung (18) perforiert ist, die in der Ebene eine im wesentlichen dreieckförmige Gestalt aufweist und sich längs eines Kreisbogens bewegt, dessen Mittelpunkt mit der Achse der drehbaren Spindel (23) zusammenfällt.

3. Schubdüse nach Anspruch 1, dadurch gekennzeichnet, daß die Verschlußvorrichtung (37) in zwei gleiche Teile (37a, 37b) unterteilt ist, von denen jedes die Hälfte (38a, 38b) der Öffnung aufweist und die sich geradlinig gleichzeitig in einander entgegengesetzter Richtung symmetrisch zueinander in einer gemeinsamen Ebene auf einem Sitz verschiebbar sind, der den ersten Kragen (7) umschließt.

4. Schubdüse nach Anspruch 3, dadurch gekennzeichnet, daß die Hälften (38a, 38b) der Öffnung Halbkreise sind und den gleichen Durchmesser haben.

5. Schubdüse nach Anspruch 3, dadurch gekennzeichnet, daß die Spindel (23) zwei Zapfen (24) zum Antrieb der Verschlußvorrichtung trägt, von denen jeder eine Hälfte der Verschlußvorrichtung antreibt.

6. Schubdüse nach Anspruch 1 oder 2, dadurch gekennzeichnet, daß die Dichtheit zwischen der Spindel (23) und dem Körper (2) einerseits durch ein abgeschrägtes Teil (25) der Spindel, das auf einer Dichtungsarmatur (26) aufgestützt ruht, und andererseits durch eine Stopfbüchse (27) sichergestellt ist, wobei letztere und der Ring (26) beispielsweise aus porigem Kohlenstoff oder aus karbonfaserverstärktem Kohlenstoff bestehen.

## Claims

1. A nozzle assembly comprising, in succession in the direction of gas ejection, a first throat, a gas smoothing chamber, a second throat, and means of regulating the section of the first throat, mounted to slide perpendicularly to the axis of the nozzle, characterised in that the second throat is followed by a flare and the said regulating means comprise a perforated-gate slide valve (17, 37), entirely enclosed in the body (2) of the assembly, and in that it comprises a gate-activating unit, constituted by a shaft (23) mounted to rotate parallel to the axis of the nozzle assembly, and in a sealed fashion, in the body (2) of said assembly, the perforated gate (17, 37) sliding on a seat (8) surrounding the first throat (7).

2. A nozzle assembly according to Claim 1, characterised in that the gate (17) is perforated by an opening (18) having in its entirety, in plan view, a triangular shape, sliding in accordance with the arc of a circle whose centre coincides with the axis of said rotary shaft (23).

3. A nozzle assembly according to Claim 1, characterised in that the perforated gate (37) is divided into two equal portions (37a, 37b), each having one half (38a, 38b) of said perforation, and simultaneously sliding rectilinearly one against the other in opposite directions, symmetrically in the same plane, on a seat surrounding the first throat (7).

4. A nozzle assembly according to Claim 3, characterised in that the halves (38a, 38b) of the said perforation are semicircular, and have the same diameter.

5. A nozzle assembly according to Claim 3, characterised in that the said shaft (23) comprises two pins (24) for driving the gate, each driving one half thereof.

6. A nozzle assembly according to Claim 1 or 2, characterised in that the seal between the shaft (23) and the body (2) is ensured on the one hand by means of a bevelled portion (25) of said shaft, which is in bearing contact on a packing gland (26) and, on the other hand, by means of a packing box (27), this latter and the ring (26) being made for example from expanded carbon or carbon-carbon.

EP 0 233 806 B1

FIG. 1

FIG. 2

FIG. 3

FIG. 4